(19) Europäisches Patentamt
European Patent Office
Office européen des brevets

(11) **EP 1 880 042 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(21) Anmeldenummer: 06755173.9

(22) Anmeldetag: **12.05.2006**

(51) Int Cl.:
***C25B 1/00*** *(2006.01)*

(86) Internationale Anmeldenummer:
**PCT/EP2006/062262**

(87) Internationale Veröffentlichungsnummer:
**WO 2006/120240 (16.11.2006 Gazette 2006/46)**

(54) **NIEDRIG-TEMPERATUR-SCHMELZFLUSS-ELEKTROLYSE VON QUARZ**

LOW TEMPERATURE MOLTEN SALT ELECTROLYSIS OF QUARTZ

ELECTROLYSE DU QUARTZ EN BAIN DE SELS FONDUS, À BASSE TEMPÉRATURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.05.2005 EP 05104028**

(43) Veröffentlichungstag der Anmeldung:
**23.01.2008 Patentblatt 2008/04**

(73) Patentinhaber: **Nägel, Wulf**
**50999 Köln (DE)**

(72) Erfinder: **Nägel, Wulf**
**50999 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**US-A- 4 448 651   US-A1- 2004 108 218**

• **TOSHIYUKI NOHIRA ET AL.: "Pinpoint and bulk electrochemical reduction of insulating silicon dioxide to silicon" NATURE MATERIALS, Bd. 2, 18. Mai 2003 (2003-05-18), Seiten 397-401, XP002346041 Gefunden im Internet: URL:http://www.nature.com/nmat/journal/v2/ n6/full/ nmat900.html> [gefunden am 2005-09-21]**
• **D. ELWELL: "Electrowinning of silicon from solutions of silica in alkali metal fluoride/alkaline earth fluoride eutectics" SOLAR ENERGY MATERIALS, Nr. 5, 1981, Seiten 205-210, XP002346042**

**EP 1 880 042 B1**

**Beschreibung**

Die vorliegende Erfindung betrifft ein Verfahren zur Herstellung von Silizium.

Silizium wird auf dem Weltmarkt in drei Angebotsformen angeboten: Neben Silizium als Legierungsbestandteil und technischem Silizium ("metallurgical grade") ist Reinsilizium ("electronic grade") als dritte Angebotsform von großer, steigender Bedeutung. Letztere findet in der Halbleitertechnologie Anwendung, es bestehen in diesem Produktsektor hohe Anforderungen im Hinblick auf Reinheitsgrad und Qualität.

Die Produktion von Reinsilizium ist in den letzten 25 Jahren stark gestiegen, 1980 lag die Jahresproduktion bei 3000 t, 1997 bei 20.000 t. Reinheitsgrad, Kristallstruktur (amorph, polykristallin, monokristallin) und Produktionskosten sind die drei entscheidenden Kriterien in der technisch-industriellen Anwendung.

Der Preis für Reinsilizium hängt vom Reinheitsgrad und der Kristallstruktur ab. 1997 kostete 1 kg polykristallines Silizium ca. 40,00 €, monokristallines Silizium ca. 300,00 €, hochreines Silizium, das als sogenannte "Si-wafer" in der Halbleitertechnik verwendet wird, ca. 8.500,00 €.

Silizium zeigt nur bei höchster Reinheit Halbleitereigenschaften. Der spezifische Widerstand von elementarem Silizium wird mit $1 \cdot 10^{10}\ \Omega \cdot cm$, teilweise auch mit $1 \cdot 10^{18}\ \Omega \cdot cm$ angegeben. Bei technisch hergestelltem Reinsilizium beträgt der Wert bis zu $150.000\ \Omega \cdot cm$.

Für Reinsilizium müssen insbesondere die Gehalte an Bor und Phosphor gering sein. Typischerweise geforderte Reinheitsgrade sind 0,1 bis 1 ppb. Der Widerstand sollte nicht kleiner $100\ \Omega \cdot cm$ sein. Je höher der Widerstand, desto höher die Reinheit.

Reinsilizium wird aus technischem Silizium gewonnen. Die Gewinnung von technischem Silizium erfolgt durch Reduktion von Quarziten mit Koks im Lichtbogenofen (carbothermische Reduktion), wobei ein Ausbeutegrad von 80% Silizium bezogen auf $SiO_2$ des Ausgangsmaterials erreicht wird. Die hohe Betriebstemperatur von ca. 2000°C führt auch zu einem hohen Energiebedarf von ca. 11 bis 14 MWh/t Silizium.

Das so erhaltene technische Silizium wird gemahlen und über Säurebad und Wäsche gereinigt. Danach kann es in zwei verschiedenen Herstellungsverfahren zu Reinsilizium aufgereinigt werden. Etwa ¾ der Weltproduktion werden durch das sogenannte "Siemens-C-Verfahren" erhalten. Entweder erfolgt die Reindarstellung über Trichlorsilan ($HSiCl_3$) oder Silan ($SiH_4$). Über Roh- und Feindestillation des Trichlorsilans oder des Silans lassen sich so hohe Reinheitsgrade erreichen.

Trichlorsilan wird erhalten, wenn technisches Silizium in einem Wirbelschichtreaktor mit Chlorwasserstoff umgesetzt wird.

Polykristallines Reinsilizium gewinnt man durch pyrolytische Zersetzung des Trichlorsilan bei einer Temperatur von 1000°C entlang dünner Stäbe aus Reinsilizium. Unter Wasserstoffatmosphäre lässt sich die Ausbeute - unter Inkaufnahme der aufwendigen Sicherheitsbedingungen - erhöhen. Allerdings ist auch in dem so erhaltenen Destillat noch häufig ein gewisser Anteil an Bortrichlorid enthalten, so dass der spezifische Widerstand des daraus hergestellten Siliziums $1500\ \Omega \cdot cm$ nicht überschreitet.

Eine weitere Möglichkeit zur Reinigung ist der Weg über das Siliziumtetrafluorid. Hierzu wird Siliziumtetrafluorid mit Natriumaluminiumhydrid zum Silan umgesetzt, das anschließend bei einer Temperatur von ca. 800°C einer Pyrolyse unterworfen wird. Wegen der chemischen Instabilität des Silans und der damit verbundenen Explosionsgefahr sind ebenfalls aufwendige Sicherheitsbedingungen erforderlich. Als Produkt dieses Fertigungsprozesses entstehen hochreine Siliziumkugeln mit einem Durchmesser von 1 bis 3 mm.

Aufgrund des hohen Energieaufwandes besteht weiterhin ein Bedarf nach Verfahren zur Herstellung von Silizium, insbesondere Reinsilizium, die mit geringerem Energieaufwand auskommen und möglichst geringe Umweltbelastungen hervorrufen.

Insbesondere ist es Aufgabe dieser Erfindung, Verfahren bereitzustellen, die die Nachteile des Standes der Technik überwinden.

Gelöst wird die Aufgabe durch ein Verfahren zur Herstellung von Silizium mit folgenden Schritten

a) Schmelzflusselektrolyse von $SiO_2$-haltigem Ausgangsmaterial zusammen mit Antimon, Quecksilber und Schwefel, um ein aufgeschlossenes Material zu erhalten

b) Waschen zum Entfernen des elementaren Schwefels

c) Säurebehandlung zur Entfernung von Fremdionen

d) Reduktionsbehandlung zur Reduktion von Quecksilber- und/oder Antimonsalzen

e) Dichtetrennung zur Abtrennung des Siliziums von restlichen Komponenten.

Der wesentliche Bestandteil des Verfahrens ist eine Schmelzflusselektrolyse, die bei relativ geringen Temperaturen abläuft.

Erfindungsgemäß wird $SiO_2$ (Quarz, Sand) zusammen mit Antimon, Quecksilber und Schwefel der Schmelzflusselektrolyse unterzogen. Es wird vermutet, dass während der Schmelzflusselektrolyse im wesentlichen folgende Schritte ablaufen:

1) Schwefel (in Form von $S_6$- und $S_8$-Molekülen) wird am Pluspol oxidiert, so dass zweiwertige Polysulfidkationen gebildet werden:

$$S_x \rightarrow S_x{}^{2+} + 2\ e^-$$

2) Diese Schwefelkationen oxidieren das elementare Quecksilber:

$$S_x{}^{2+} + Hg \rightarrow S_x + Hg^{2+}$$

3) Die Hg-Kationen reagieren mit dem elementaren Antimon

$$3\ Hg^{2+} + 2\ Sb \rightarrow 3\ Hg + 2\ Sb^{3+}$$

Durch diesen Schritt wird noch während der Schmelzflusselektrolyse das elementare Quecksilber prozessintern zurückgewonnen.

4) In der flüssigen Schmelze bilden die Antimonkationen und die Schwefelanionen den schwarzen, schwerlöslichen Feststoff Antimon-(III)-Sulfid gemäß

$$2\ Sb^{3+} + 3\ S^{2-} \rightarrow Sb_2S_3$$

Hohe Feldstärken können zur Bildung von Antimon-(V)-Sulfid und Quecksilber-(II)-Sulfid führen, was unerwünscht ist.
Im Bereich des Minuspols finden vermutlich folgende Schritte statt:

5) Schwefel wird reduziert

$$S_x + 2\ e^- \rightarrow S_x{}^{2-}$$

Diese Polysulfidanionen greifen die Siliziumatome im $SiO_2$-Gitter an. Hierbei kommt es zu einer heterolytischen Spaltung der Si-O-Bindung.

6) Die Si-Kationen reagieren mit dem Polysulfidanionen in einer Redox-Reaktion. Es entstehen elementares Silizium und elementarer Schwefel.

$$Si^{4+} + 2\ [S_x{}^{2-}] \rightarrow Si + 2\ S_x$$

Dies wird vermutlich durch Antimon-(III)-Sulfid katalytisch unterstützt.

7) Das $Sb_2S_3$ reagiert auch mit den Oxidanionen nach folgender Reaktion:

$$6\ O^{2-} + 2\ Sb_2S_3 \rightarrow 3\ O_2 + 4\ Sb + 6\ S^{2-}$$

Im Prozess dieser Schmelzflusselektrolyse werden die Stoffmengenanteile von Silizium, Schwefel, Antimon und Quecksilber bevorzugt wie folgt ausgewählt:

- $SiO_2$ : S = 1:4 bis 1:6
- $SiO_2$ : Sb = 1:0,4 bis 1:0,6 und/oder
- $SiO_2$: Hg = 1:1 bis 1:1,3.

Für die Schmelzflusselektrolyse ist eine Feldstärke im Bereich vom 0,1 bis 0,5 V/m besonders gut geeignet, mehr bevorzugt sind Werte zwischen 0,1 und 0,3 V/m. Das Stoffgemisch wird möglichst gleichmäßig erwärmt und geht in einem Temperaturbereich von 110 bis 120°C in eine Schmelze über. Vorzugsweise wird diese dann auf 125°C erhöht. Diese Bedingungen sollten für einige Minuten eingehalten werden. Steigt die Spannung deutlich an, sind die elektrochemischen Reaktionen beendet. Eine weitere Verweilzeit von mindestens ca. 30 min hat sich als vorteilhaft für die Ausbeuteerhöhung erwiesen.

Als nächstes erfolgt ein Waschschritt, um den elementaren Schwefel zu entfernen. Besonders geeignet sind alle Lösungsmittel, die eine gute Löslichkeit für Schwefel ($S_x$) aufweisen. Ein gute Löslichkeit bedeutet, dass bei 20°C eine Löslichkeit von mindestens 10 g $S_x$ in 100 g Lösungsmittel (gesamt 110 g) erreicht wird. Beispiele hierfür sind Kohlenstoffdisulfid ($CS_2$), Guanidin ($CH_5N_3$), Thiazol ($CH_3H_3NS$), Thiophen ($C_4H_4S$), Dioxan ($C_4H_8O_4$) sowie Mischungen davon.

Vor der Wäsche kann das Material mechanisch zerkleinert werden. Geeignete Korngrößen liegen im Bereich von 0,2 bis 15 mm. In einer Ausführungsform liegt der bevorzugte Bereich zwischen 2 bis 15 mm, in einer anderen zwischen 0,4 und 4 mm. Beobachtungen zeigen, dass das Waschen verbessert wird, wenn die Korngröße klein ist. Bevorzugt werden mehrere Waschschritte durchgeführt und vor der Abtrennung wird das erhaltene Material mit dem Lösungsmittel eine Zeitlang gerührt. Für 1 mol $SiO_2$ sind je nach Lösungsmittelart 0,8 bis 9 kg (ca. 1 bis 12 l) Lösungsmittel, beispielsweise Kohlenstoffdisulfid, geeignet. Die eingesetzten Lösungsmittel sollten eine hohe Reinheit aufweisen.

Das Lösungsmittel und der durch das Lösungsmittel entfernte Schwefel können anschließend wiederverwendet werden.

Nach dem Waschen und Abtrennen des Materials lässt man das restliche Lösungsmittel vorteilhaft verdunsten. Dies kann durch Anlegen eines Vakuums begünstigt werden.

Als nächster Schritt erfolgt eine Säurebehandlung. Geeignet sind starke Säuren, die einen pH-Wert von etwa -1,0 bis -1,6 aufweisen. Geeignet sind z.B. Mischungen von Salpetersäure mit weiteren Säuren, beispielsweise Schwefelsäure, Salzsäure, Phosphorsäure, Perchlorsäure, Chlorsäure, chlorige Säure, Bromwasserstoffsäure, Bromsäure, Methansäure oder Mischungen dieser Säuren.

Der chemische Reinheitsgrad der Säuren sollte hoch sein. Geeignete Mengen für 1 mol $SiO_2$ sind im Bereich von 2 bis 7, bevorzugt 3 bis 4 l Säuren. Die Mischung sollte vorzugsweise einige Zeit, beispielweise 10 bis 20 min gerührt werden.

Ohne an diese Theorie gebunden zu sein, wird vermutet, dass durch die Säure unerwünschte Kationen, z.B. Bor, Magnesium, Calcium, Aluminium und Eisen sowie Anionen wie Phosphat, Bromid, Iodid, herausgelöst werden können. Gegebenenfalls ist hierzu eine vorherige Oxidation der vorhandenen Verunreinigungen notwendig.

Sediment und Überstand werden getrennt. Aus dem Überstand können gegebenenfalls Schwefel und Säuren wiedergewonnen werden und damit wiederverwendet (regeneriert) werden. Soweit die Abtrennung der Säure nicht vollständig ist, kann es sinnvoll sein, ein oder mehrere Waschschritte mit destilliertem Wasser durchzuführen. Typische Mengen liegen im Bereich von 2 bis 5 l pro mol $SiO_2$.

Als nächster Schritt folgt ein Reduktionsschritt, mit dem die unerwünschten Feststoffe HgS und $Sb_2S_5$ in Hg bzw. Sb überführt werden sollen. Geeignete Reduktionsmittel sind solche mit einem Redox-Potential in der Größenordnung von etwa 1,6 V bis 1,8 V, bevorzugt etwa 1,74 V, insbesondere in wässrigen Salzlösungen. Eine geeignete Substanz ist eine Natriumdithionitlösung.

Das Sediment aus dem letzten Verfahrensschritt wird - gegebenenfalls nach den Waschschritten - in dem Reduktionsmittel für eine Zeitlang behandelt, beispielsweise für 10 min gerührt. Geeignete Konzentrationen für die Molarität des Reduktionsmittels, beispielsweise Natriumdithionit, liegen im Bereich von 0,3 bis 1,2 mol/l, bevorzugt 0,5 mol/l. Ein geeignetes Flüssigkeitsvolumen beträgt etwa 1 bis 5 l, bevorzugte etwa 2,5 l pro mol $SiO_2$. Dabei kann die Lösung leicht erwärmt werden, bevorzugt liegt die Temperatur zwischen Raumtemperatur und etwa 60°C, mehr bevorzugt zwischen 50 und 60°C.

Nach der Behandlung mit dem Reduktionsmittel können sich wiederum Waschschritte anschließen. Geeignete Wassermengen liegen im Bereich von 2 bis 5 l pro mol $SiO_2$. Das verbleibende Sediment enthält neben Silizium unter anderem Hg, Sb, $Sb_2S_3$ und Restmengen des $SiO_2$.

Es folgt ein Trocknungsschritt sowie in Abhängigkeit vom Sedimentzustand gegebenenfalls eine Zerkleinerung. Typischerweise geeignete Korngrößen liegen zwischen 0,2 und 3 mm, wobei Bereiche zwischen 0,5 und 3 mm sowie zwischen 0,8 und 2 mm bevorzugt sind. Besonders bevorzugt sind jedoch Korngrößen im Bereich von 0,4 bis 0,8 mm.

Als nächster Schritt schließt sich eine Dichtetrennung an. Von den enthaltenen Feststoffen hat das Silizium das geringste spezifische Gewicht (Dichte von Reinsilizium 2,33 g • cm$^{-3}$).

In einer bevorzugten Ausführungsform wird die Dichtetrennung als Dichtezentrifugation durchgeführt, insbesondere in Trichlorsilan. Bei 15°C hat diese Flüssigkeit eine Dichte von 2,36 g • cm$^{-3}$, d.h. die restlichen metallischen, oxidischen und sulfidischen Komponenten sinken zu Boden. Dies kann durch eine Zentrifugation beschleunigt werden. Das hierbei aufschwimmende Silizium (poly- und monokristallenes Silizium) kann abgetrennt werden und beispielsweise im Vakuum vom Trichlorsilan befreit werden. Auch der Niederschlag kann nach Entfernung des Trichlorsilans wieder als Feststoffgemisch der nächsten Schmelzflusselektrolyse zugeschlagen werden.

Das erfindungsgemäße Verfahren weist zahlreiche Vorteile auf, insbesondere, dass als Ausgangsstufe gereinigter Sand/Quarz eingesetzt werden kann. Dieser sollte nur auf eine gewisse Korngröße gesiebt und gewaschen werden. Es ist nicht notwendig, technisches Silizium einzusetzen.

Weiterhin werden zur Aufreinigung Substanzen eingesetzt, die zum einen gut verfügbar sind und zum anderen verfahrensintern wiedergewonnen werden, so dass praktisch - bis auf Kleinstmengen - keine Abfallstoffe entstehen.

Aufgrund der deutlich niedrigeren Prozesstemperaturen ist das Herstellungsverfahren im Vergleich zu Verfahren des Standes der Technik energiesparend. Nach Schätzung liegt der Energiebedarf im Vergleich zum Standes der Technik bei weniger als 20%, eher in der Größenordnung von 10%. Auch hierbei wird das Silizium mit einer guten Ausbeute von ca. 80% und höher gewonnen.

Durch das erfindungsgemäße Verfahren wird Reinsilizium mit hohem Reinheitsgrad gewonnen. Der spezifische elektrische Widerstand kann mehr als 6000 Ω • cm, gegebenenfalls auch mehr als 8000 Ω • cm erreichen.

Der Anteil an monokristallinem Silizium ist hoch, beispielsweise über 50%, bevorzugt über 80%. Da nicht unter Wasserstoffatmosphäre oder ähnlichem gearbeitet wird, sind keine besonderen Sicherheitsvorkehrungen in der Anlage erforderlich. Die Anlagen sind technisch wesentlich weniger aufwendig als Anlagen des Standes der Technik.

Die vorliegende Erfindung wird durch das nachfolgende Beispiel weiter erläutert.

*Beispiel 1*

Ein zweimal mit Wasser gewaschener, gereinigter Sand wurde auf eine Korngröße von 0,3 bis 0,8 mm Durchmesser gesiebt. Zusammen mit pulverförmigem Schwefel und pulverförmigem Antimon mit einer Korngröße von maximal 0,3 mm wurde ein möglichst gleichmäßiges Feststoffgemisch hergestellt. Die molaren Anteile betrugen

$SiO_2$:S:Sb:Hg = 1:5,2:0,52:1,15.

Das Gemisch wurde in einem Behälter aus Eisen (C-Anteil < 1,5%) überführt und erwärmt. Bei ca. 110°C begann das Gemisch eutektisch zu schmelzen.

Die dickflüssige Schmelze wirkte mattgrau. Bei einer Temperatur von ca. 115°C wurde die Schmelzflusselektrolyse eingeleitet. Als Minuspol diente der Eisenbehälter, als Pluspol ein elektrisch-leitendes Injektionsgerät (eine Röhre mit einem Durchmesser von 0,2 mm), das in die Schmelze eintauchte und durch das Quecksilber mit gleichmäßiger Geschwindigkeit während der Elektrolyse in die Schmelzflüssigkeit einfloss. Hierbei wurde ein Temperaturanstieg auf ca. 119°C beobachtet.

Als Anfangsspannung wurde ein Wert von 5,1 V angelegt. Beim Einströmen des Quecksilbers in die Schmelze begann die elektrochemische Reaktion und die Spannung sank auf einen Bereich zwischen 1,1 und 0,6 V. Die Stromstärke variierte dabei in einem Bereich von 0,3 bis 1,5 A. Es wurde eine Gasbildung beobachtet, die als Sauerstoff identifiziert wurde. Das Verfahren wurde über die Feldstärke gesteuert, wobei eine Feldstärke von ca. 0,22 V • m$^{-1}$ vorgegeben wurde.

Nach der Einleitung des Quecksilbers wurde die Temperatur im Eisenbehälter auf ca. 125°C erhöht. Dabei wurden für 5 min die elektrischen Feldbedingungen konstant gehalten. Die Spannung stieg auf etwa 1,8 V. Sodann stieg sie sprunghaft auf einen Wert von etwas über 5 V. Daraufhin wurde die Elektrolyse beendet. Es wurden dann die Temperaturbedingungen noch für etwa 30 min eingehalten. Die Schmelze hatte hierbei eine kristalline, silbriggraue Oberfläche. Darunter hatte sich ein grau-schwarzer, (anthrazitfarbener) Regulus abgesetzt. Der größte Teil des elementaren Quecksilbers hatte sich in Lachen und Linsen gesammelt, er konnte direkt durch Absaugen entfernt werden. Der gesamte Regulus einschließlich verbliebener Quecksilbertropfen und -linsen wurde in ein inertes Reaktionsgefäß gegeben.

*Beispiel 2 - Waschschritt*

Das im Beispiel 1 erhaltene Material wurde auf eine Korngröße von etwa 2 bis 13 mm zerkleinert. Es wurde dann mit 1,5 l Kohlenstoffdisulfid für 10 min gerührt. Der Überstand wurde abgetrennt und erneut mit 1,5 l Kohlenstoffdisulfid gewaschen. Der Überstand wurde erneut abgetrennt und - nach Vereinigung mit dem ersten Überstand - der Schwefelwiedergewinnung zugeführt. Aus dem Sediment ließ man die verbleibenden Lösungsmittelanteile verdunsten. Hierzu wurde das Sediment geringfügig erwärmt (Temperatur < 50°C).

*Beispiel 3*

Das so erhaltene getrocknete Sediment wurde in einem inerten Gefäß einem Säurebad unterworfen. Als Säure wurde eine Mischung wässriger Salpetersäure mit Endkonzentration von 41 Gew.-% und wässriger Schwefelsäure mit Endkonzentration von 23 Gew.-% eingesetzt. Das Sediment wurde mit 3,7 l des Säuregemisches gewaschen, indem für 10 bis 20 min gerührt wurde. Es wurde dabei ein Entweichen nitroser Gase beobachtet, was beispielsweise mit einer Oxidation von Bromid zu Bromat in Verbindung gebracht wird. Die Säureüberstand, der leicht milchig-trüb ist, wurde abgetrennt. In der flüssigen Phase befand sich kolloidal aufgeschwemmter Schwefel, der - ebenso wie die Säure - einem Recycling zugeführt wurde.

Das schwarze Sediment, teilweise mit einem grauweißen Belag überzogen, wurde anschließend zweimal mit destilliertem Wasser bei Raumtemperatur gewaschen. Hierzu wurde das Sediment mit 2,8 l Wasser ca. 10 min gerührt und der Überstand abgetrennt.

*Beispiel 4*

Der aus dem Säurebad hervorgegangene Niederschlag wurde mit 2,5 l einer 0,5 mol/l Natriumdithionitlösung 10 min gerührt. Die Lösung wurde auf eine Temperatur (Erwärmung) von etwa 53°C eingestellt. Hieran schloss sich ein zweimaliger Waschschritt mit 2,8 l Wasser und Abtrennung des Überstandes an.

Der Niederschlag wurde bei etwa 40°C getrocknet und mechanisch auf einer Korngröße im Bereich von < 2 mm zerkleinert.

*Beispiel 5*

Das Feststoffgemisch aus Beispiel 4 wurde mit Trichlorsilan vermischt und bei 15°C einer fünfminütigen Zentrifugation bei 500 • g unterworfen. Das oben aufschwimmende Material wurde abgeschöpft und bei Temperaturen von 40°C und einem verminderten Druck von 30 Hektopascal (hPa) getrocknet. Der Niederschlag der Zentrifugation wurde dem Gesamtprozess als Ausgangsmaterial erneut zugeführt.

**Patentansprüche**

1. Verfahren zur Herstellung von Silizium mit folgenden Schritten

    a) Schmelzflusselektrolyse von $SiO_2$-haltigem Ausgangsmaterial zusammen mit Antimon, Quecksilber und Schwefel, um ein aufgeschlossenes Material zu erhalten
    b) Waschen zum Entfernen des elementaren Schwefels
    c) Säurebehandlung zur Entfernung von Fremdionen
    d) Reduktionsbehandlung zur Reduktion von Quecksilber- und/oder Antimonsalzen
    e) Dichtetrennung zur Abtrennung des Siliziums von restlichen Komponenten.

2. Verfahren nach Anspruch 1, **dadurch gekennzeichnet, dass** im Schritt a) die Stoffmengenanteile wie folgt ausgewählt werden
$SiO_2$ : S = 1:4 bis 1:6
$SiO_2$ : Sb = 1:0,4 bis 1:0,6 und/oder
$SiO_2$: Hg = 1:1 bis 1:1,3.

3. Verfahren nach Anspruch 1 oder 2, **dadurch gekennzeichnet, dass** die Schmelzflusselektrolyse im Schritt a) mit einer Feldstärke im Bereich von 0,1 bis 0,5 V/m durchgeführt wird.

4. Verfahren nach einem der Ansprüche 1 bis 3, **dadurch gekennzeichnet, dass** der Waschschritt b) durch Waschen mit Kohlenstoffdisulfid, Guanidin, Thiazol, Thiophen, Dioxan oder Mischungen davon erfolgt.

5. Verfahren nach einem der Ansprüche 1 bis 4, **dadurch gekennzeichnet, dass** die Säurebehandlung mit einer Mischung aus Salpetersäure und einer Säure ausgewählt aus Schwefelsäure, Salzsäure, Phosphorsäure, Perchlorsäure, Chlorsäure, Chlorige Säure, Bromwasserstoffsäure, Bromsäure, Methansäure erfolgt.

6. Verfahren nach einem der Ansprüche 1 bis 5, **dadurch gekennzeichnet, dass** die Reduktion mit einer wässrigen Natriumdithionit-Lösung durchgeführt wird.

**7.** Verfahren nach einem der Ansprüche 1 bis 6, **dadurch gekennzeichnet, dass** die Dichtetrennung durch eine Dichtezentrifugation in Trichlorsilan erfolgt.

**8.** Verfahren nach einem der Ansprüche 1 bis 7, **dadurch gekennzeichnet, dass** die Schmelzflusselektrolyte in einem Behälter aus Eisen durchgeführt wird.

**9.** Verfahren nach einem der Ansprüche 1 bis 8, **dadurch gekennzeichnet, dass** nach Schritt a) und/oder nach Schritt d) eine Zerkleinerung des aufgeschlossenen Materials erfolgt.

**10.** Verfahren nach einem der Ansprüche 1 bis 9, **dadurch gekennzeichnet, dass** nach Schritt c) und/oder Schritt d) mit Wasser gewaschen wird.

**11.** Verfahren nach einem der Ansprüche 1 bis 10 **dadurch gekennzeichnet, dass** abgetrennte Mengen an Säuren, Lösungsmitteln, Schwefel, Quecksilber, Quecksilberverbindungen, Antimon und/oder Antimonverbindungen aufbereitet und wiederverwendet werden.

**Claims**

**1.** A process for preparing silicon comprising the following steps

a) fused salt electrolysis of an $SiO_2$-containing starting material together with antimony, mercury and sulfur to obtain a decomposed material;
b) washing to remove elemental sulfur;
c) acid treatment to eliminate foreign ions;
d) reduction treatment to reduce mercury and/or antimony salts;
e) density separation to separate the silicon from the residual components.

**2.** The process according to claim 1, **characterized in that** the molar fractions of step a) are selected as follows:

$SiO_2$ : S = from 1:4 to 1:6
$SiO_2$ : Sb = from 1:0.4 to 1:0.6 and/or
$SiO_2$ : Hg = from 1:1 to 1:1.3.

**3.** The process according to claim 1 or 2, **characterized in that** the fused salt electrolysis of step a) is performed at a field strength in the range of from 0. 1 to 0. 5 V/m.

**4.** The process according to any one of claims 1 to 3, **characterized in that** the washing step b) is performed by washing with carbon disulfide, guanidine, thiazole, thiophene, dioxan or mixtures thereof.

**5.** The process according to any one of claims 1 to 4, **characterized in that** the acid treatment is performed with a mixture of nitric acid and an acid selected from sulfuric acid, hydrochloric acid, phosphoric acid, perchloric acid, chloric acid, chlorous acid, hydrobromic acid, bromic acid, methanoic acid.

**6.** The process according to any one of claims 1 to 5, **characterized in that** the reduction is performed with an aqueous sodium dithionite solution.

**7.** The process according to any one of claims 1 to 6, **characterized in that** the density separation is performed by a density centrifugation in trichlorosilane.

**8.** The process according to any one of claims 1 to 7, **characterized in that** the fused salt electrolysis is performed in a vessel made of iron.

**9.** The process according to any one of claims 1 to 8, **characterized in that** the digested material is crushed after step a) and/or after step d).

**10.** The process according to any one of claims 1 to 9, **characterized in that** washing with water is performed after step c) and/or step d).

**11.** The process according to any one of claims 1 to 10, **characterized in that** separated amounts of acids, solvents, sulfur, mercury, mercury compounds, antimony and/or antimony compounds are processed and reused.

**Revendications**

**1.** Procédé de fabrication de silicium au moyen des étapes suivantes :

a) électrolyse ignée de la matière première contenant du $SiO_2$ avec de l'antimoine, du mercure et du soufre, afin d'obtenir une matière désagrégée
b) lavage pour éliminer le soufre élémentaire
c) traitement à l'acide pour éliminer les ions étrangers
d) réduction en vue d'un retrait du mercure et/ou des sels d'antimoine
e) séparation en fonction de la densité pour isoler le silicium des composants restants.

**2.** Procédé selon la revendication 1, **caractérisé en ce que** dans l'étape a), les fractions molaires des matières sont sélectionnées comme suit :

- $SiO_2$: S = 1:4 à 1:6
- $SiO_2$: Sb = 1:0,4 à 1:0,6 et/ou
- $SiO_2$: Hg = 1:1 à 1:1,3.

**3.** Procédé selon les revendications 1 ou 2, **caractérisé en ce que** l'électrolyse ignée est réalisée dans l'étape a) sous une intensité de champ électrique comprise entre 0,1 et 0,5 V/m.

**4.** Procédé selon l'une quelconque des revendications 1 à 3, **caractérisé en ce que** l'étape du lavage b) est réalisée en lavant avec du bisulfure de carbone, de la guanidine, du thiazole, du thiophène, du dioxane ou des mélanges de ceux-ci.

**5.** Procédé selon l'une quelconque des revendications 1 à 4, **caractérisé en ce que** le traitement à l'acide est réalisé avec un mélange d'acide nitrique et d'un acide sélectionné parmi l'acide sulfurique, l'acide chlorhydrique, l'acide phosphorique, l'acide perchlorique, l'acide chlorique, l'acide chloreux, l'acide bromhydrique, l'acide bromique, l'acide méthanoïque.

**6.** Procédé selon l'une quelconque des revendications 1 à 5, **caractérisé en ce que** la réduction est réalisée avec une solution aqueuse de dithionite de sodium.

**7.** Procédé selon l'une quelconque des revendications 1 à 6, **caractérisé en ce que** la séparation en fonction de la densité est réalisée à l'aide d'une centrifugation par densité dans du trichlorosilane.

**8.** Procédé selon l'une quelconque des revendications 1 à 7, **caractérisé en ce que** l'électrolyse ignée est réalisée dans un réacteur en fer.

**9.** Procédé selon l'une quelconque des revendications 1 à 8, **caractérisé en ce qu'**une fragmentation de la matière désagrégée succède à l'étape a) et/ou à l'étape d).

**10.** Procédé selon l'une quelconque des revendications 1 à 9, **caractérisé en ce que** l'un lavage l'eau après est réalisé l'étape c) et/ou l'étape d).

**11.** Procédé selon l'une quelconque des revendications 1 à 10 **caractérisé en ce que** des quantités séparées d'acides, de solvants, de soufre, de mercure, de composés du mercure, d'antimoine et/ou de composés d'antimoine sont purifiés et recyclés.